# EUROPEAN PATENT APPLICATION

(11) **EP 1 604 761 A1**
(43) Date of publication of application: **14.12.2005**
(21) Application number: 04714903.4
(22) Date of filing: 26.02.2004
(51) Int. Cl.: B22F 9/24, B22F 9/00, B01J 13/00, B01J 23/42, B01J 23/44, B01J 23/46

(54) **METAL COLLOID AND CATALYST PRODUCED FROM SUCH METAL COLLOID**

(30) Priority: 03.03.2003 JP 2003055768
(71) Applicant: TANAKA KIKINZOKU KOGYO KABUSHIKI KAISHA, Chuo-ku, Tokyo 103-8206 (JP)
(72) Inventor: SAITO, Masayuki, c/o Tanaka Kikinzoku Kogyo K. K., Hiratsuka-shi, Kanagawa 254-0076 (JP)
(74) Representative: Klunker . Schmitt-Nilson . Hirsch
(86) International application number: PCT/JP2004/002256
(87) International publication number: WO 2004/078388

(57) **Abstract**

Disclosed is a metal colloid comprising: a solvent composed of water or a mixed solvent of water and an organic solvent; cluster particles comprising one or more metal species; and a protective agent for protecting the cluster particles, **characterised in that** the protective agent comprises a polymeric material which can be bound to one or more ion species selected from the group consisting of alkali earth metal ions, transition metal ions, rare earth metal ions, an aluminum ion and a gallium ion, and the protective agent has one or more ion species selected from the group consisting of alkali earth metal ions, transition metal ions, rare earth metal ions, an aluminum ion and a gallium ion bounded thereto.

## Description

### Technical Field

The present invention relates to a metal colloid used for the preparation of catalysts etc.

### Background Art

The term "colloid" means a state in which fine particles (cluster particles) of a metal, ceramic, or the like having a size 1 to 100 nm that are insoluble in a solvent are dispersed or suspended in the solvent. Generally known are colloidal solutions in which liquid solvents are used. In recent years, considerations have been made to use colloids for the production of materials in various fields, such as catalysts or optical, electric or magnetic materials. One of the methods for using a colloid for material production includes, for example, catalyst production where a colloidal solution is adsorbed by an adsorbate (a carrier). Unlike conventional methods in which an aqueous solution or a bulk material is used, the above method offers an advantage that fine metal particles constituting cluster particles can be dispersed directly and highly on the target adsorbate (preparation of catalysts using a colloidal solution is disclosed in prior arts, for example, in Japanese Patent Application Laid-Open Nos. 2000-279818 and 2000-279824).

As solvent for colloids, water or a mixed solvent of water and an organic solvent is typically used. When a colloid is used for material production, it is critical how much the colloid is soluble in water. If the colloid is not soluble in water, while it is used, a precipitate is formed from the colloidal solution, which makes it hard to handle and further, affects product quality (dispesibility or uniformity of the particles).

Means of improving the solubility of a colloid in water include, for example, one in which certain elements are added to the colloidal solution. The present inventors have already confirmed that the addition of hydrophilic ions such as alkali metal ions to colloids, for example, the addition of sodium ions makes it possible to improve the water-solubility of colloids, thereby inhibiting the colloidal solutions from forming precipitates.

However, when an adsorbate adsorbs a colloidal solution having alkali metal ions added thereto or such a colloidal solution is evaporated, the alkaline metal ions remain on the adsorbate. When the intended product is a catalyst, the residual alkaline metal ions might act as a catalytic poison, or when the intended product is an electronic material, it is treated as a non-negligible impurity.

Further, there are some cases to which means of improving the water-solubility of a colloid by the addition of alkali metal ions is not applicable. In metal colloids having certain compositions, to allow the cluster particles to be adsorbed by an adsorbate, it is necessary to adjust their solutions to the acidic pH (pH of 5 or more), but on the other hand, to obtain the effect of improving the water-solubility of the colloids by the addition of alkali metal ions, the colloidal solutions must be adjusted to pH of 6 or less. Thus, in cases where such metal colloids are used, it makes no sense to add alkali metal ions.

Considering the above described problems, preferably metal colloids themselves have high water-solubility and do not need any additives for improving their water-solubility. The present invention has been made in the light of the above described background; accordingly, its object is to provide a metal colloid which has high water-solubility, and therefore its solution forms no precipitate.

### Disclosure of the Invention

The present inventors have come to a conclusion that one possible means of solving the above described problems is to properly select a protective agent which is a constituent of a colloid and properly selecting a protective agent ensures high water-solubility of the colloid. The term "protective agent" herein used means a polymeric material that is a compound chemically bound to or physically adsorbed on the periphery of the colloid particles in a colloidal solution, thereby inhibiting the aggregation of the colloid particles and allowing the particle size distribution of the colloid particles to fall in a proper range and be stabilized.

Specifically, the present invention is a metal colloid including: a solvent composed of water or of a mixed solvent of water and an organic solvent; cluster particles composed of one or more metals; and a protective agent which protects the cluster particles, characterized in that the protective agent is a polymeric material which can be bound to one or more ions selected from the group consisting of alkali earth metal ions, transition metal ions, rare earth metal ions, aluminum ions and gallium ions.

According to the present inventors, the metal colloid of the present invention is highly water-soluble even when it includes no alkali metal ions, its water-solubility does not largely depend on the pH or the temperature of its solution, and its solution is less likely to form a precipitate.

The metal colloid of the present invention is particularly superior in that even if alkali earth metal ions, transition metal ions, rare earth metal ions, aluminum ions or gallium ions are bound to it, its water-solubility is not lowered and it can still behave as a colloid. The metal colloid to which alkali earth metal ions etc. are bound has the same function as that of bimetallic colloids, and therefore the metal that makes up cluster particles when the colloid is adsorbed by an adsorbate and an alkali earth metal etc. which is bound to the protective agent can be adsorbed on the adsorbate at the same time. In metal colloids whose protective agents are bound to an alkali earth metal etc., their cluster particles and alkali earth metal ions etc. are in close proximity to each other. Thus, such metal colloids offer the advantage that if as-prepared metal colloids are adsorbed by an adsorbate, the metal that makes up cluster particles and an alkali earth metal etc. can be adsorbed in close proximity.

Preferably, a polymeric material used as the protective agent of the present invention has at least a nitrogen atom and/or a carboxyl group in its molecule. Such a polymeric material having the above element and/or group in its molecule can be bound to alkali earth metal ions etc., by coordination if it contains nitrogen, by ionic bonding if it contains carboxyl groups and by chelation if it contains both of these.

Of these polymeric materials, particularly preferable are those having a large number of nitrogen atoms and/or carboxyl groups in its molecule. The reason for this is that in the metal colloid of the present invention, the polymeric material that makes up the protective agent is dissociated and ionized in a solvent. And when alkali earth metal ions etc. are bound to the protective agent, the dissociation and ionization of the polymeric material might be inhibited by the bonds between the ions and the nitrogen atoms or carboxyl groups of the material. In order to retain the dissociation ionization capacity of the protective agent, as a whole, even if it is interacted with the alkali earth metal ions etc., a polymeric material having a large number of nitrogen atoms and/or carboxyl groups is selected as a protective agent.

Specifically, the macromolecule materials having a large number of nitrogen atoms and/or carboxyl groups meet any one of the following requirements. If the value obtained from each of the equations shown in the following requirements is smaller than the minimum value shown in the same, the water-solubility of the metal colloid is hard to keep, whereas if the value is larger than the maximum value shown in the following requirements, polymeric materials is hard to synthesize.
(a) When a polymeric material has nitrogen atoms, the number of nitrogen atoms / (the number of carbon atoms + the number of nitrogen atoms + the number of oxygen atoms) is 0.08 to 0.4.
(b) When a polymeric material has carboxyl groups, the number of COOH atomic groups / (the number of carbon atoms + the number of nitrogen atoms + the number of oxygen atoms) is 0.02 to 0.3.
(c) When a polymeric material has both nitrogen atoms and carboxyl groups, (the number of nitrogen atoms + the number of COOH atomic groups) / (the number of carbon atoms + the number of nitrogen atoms + the number of oxygen atoms) is 0.02 to 0.4.

Specific examples of polymeric materials that meet the above requirements include: polyallylamine, polyethyleneimine, poly(N-carboxymethyl)allylamine, poly(N,N-dicarboxymethyl)allylamine and poly(N-carboxymethyl)ethyleneimine.

Cluster particles constituting a colloid may be made up of one kind of metal particles or more than one kind of metal particles, like a bimetallic colloid. The kinds of the metals are not limited to any specific ones, as long as the metals can take the form a colloid. In other words, generally a colloid is prepared by first preparing an intended aqueous solution of a metal and then reducing the metal ions in the solution to form metal particles (cluster), and metals that can be formed into colloids by such operations can be used as metals constituting cluster particles in the present invention. On the other hand, an alkali earth metal, barium, cannot be formed into cluster particles of simple substance of barium by reducing barium ions in its aqueous solution. Of the metals that constitute cluster particles, precious metals such as gold, platinum, silver, palladium, rhodium, iridium, ruthenium and osmium are preferable, because they can easily take the form of a colloid, and besides, their colloids have wide applications.

The metal colloid of the present invention can be prepared by first synthesizing a polymeric material, which is to be a protective agent, and then mixing the synthesized polymeric material and a metal salt solution of a metal, which is to constitute cluster particles. In the preparation process, the metal ions in the metal salt solution are reduced and the protective agent is adsorbed on the cluster particles, to form a colloidal solution. Alkali earth metal ions, transition metal ions, rare earth metal ions, aluminum ions or gallium ions can be bound to the protective agent in this metal colloidal solution by adding an aqueous solution of a metal salt, such as a salt of an alkali earth metal, to the metal colloidal solution.

The metal colloid of the present invention is used for the preparation of catalysts. One method of preparing catalysts using the metal colloid is to impregnate a carrier therewith so that the metal in the form of cluster particles and the alkali earth metal etc. are supported by the carrier. There is another method, in which the metal colloid is not impregnated into a carrier, but directly calcined to prepare catalysts where the metal in the form of cluster particles (or the oxide thereof) and an alkali earth metal etc. (or the oxide thereof) are mixed. In this case, the polymeric material as a protective agent disappears by the calcinations.

The metal colloid of the present invention can also be used for the formation of films as electronic materials. Desired films as electronic materials can be formed by what is called the spin coating process, specifically by dropping an appropriate amount of the metal colloid of the present invention on a rotating substrate.

### Brief Description of the Drawing

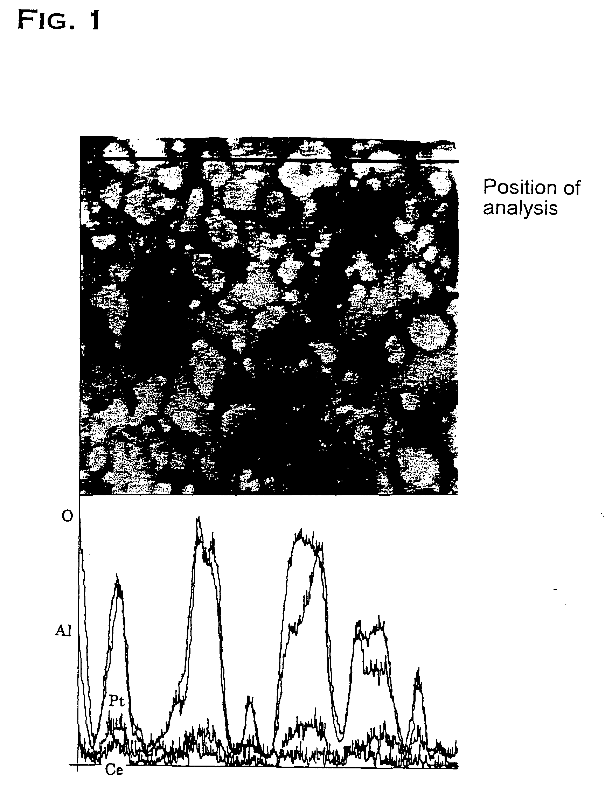

Fig. 1 is a graph showing the results of EPMA conducted for the colloid in accordance with the embodiment of the present invention in state where it is adsorbed by alumina.

### Best Mode for Carrying Out the Invention

Preferred embodiments of the present invention are described below. In the embodiments, metal colloids were prepared using platinum as a metal that makes up cluster particles, one of the four protective agents - that is, polyethyleneimine (hereinafter referred to as PEI), poly(N-carboxymethyl)allylamine (hereinafter referred to as P(CM)AA), poly(N,N-dicarboxymethyl)allylamine (hereinafter referred to as P(DCM)AA) and poly(N-carboxymethyl)ethyleneimine (hereinafter referred to as P(DC)EI), and ions of various kinds of metals classified as alkali earth metal, transition metal or rare earth metal, as auxiliary metal ions which are to be bound to the protective agent. And the water-solubility and adsorptivity were examined for each of the metal colloids. As the protective agent PEI, a commercially available reagent was used, while the other protective agents were synthesized. In the following, the synthesis of the protective agents, the preparation of precious metal colloids and the binding of the auxiliary metals is described in this order.

### A: Synthesis of Protective agents

### 1. Synthesis of P(CM)AA

A solution of 20 g (0.5 mol) of NaOH in 125 mL of water and a solution of 47.3 g (0.5 mol) of chloroacetic acid in 100 mL of water were mixed, and the mixture was added dropwise to a solution of 28.5 g (equivalent to 0.5 mol monomer) of polyallylamine in 50 mL of water heated to 50°C, while agitating the same. After continuing the agitation at 50°C for one hour, an aqueous solution of NaOH was added dropwise to the mixed solution until the mixed solution was adjusted to pH 10, the reaction temperature was raised to 95°C, and the reaction was continued at this temperature. The pH of the mixed solution was kept at 10 by properly adding an aqueous solution of NaOH, though it was decreased with the progress of the reaction. The reaction was continued until no change was observed in pH.

After completing the reaction, an aqueous solution of HNO₃ was added to the above mixed solution until the solution became opaque white, the opaque white solution was centrifuged to sediment the solid constituent, and the supernatant was removed. Then, an aqueous solution of tetramethylammonium hydroxide was added to the sediment to dissolve the same, an aqueous solution of HNO₃ was added to the solution until the solution formed a precipitate, the solution with a precipitate was centrifuged again to sediment the solid constituent, and the supernatant was removed to separate Na ions. This operation was repeated 3 times to obtain 32.6 g (0.28 mol) of P(CM)AA.

### 2. Synthesis of P(DCM)AA

A solution of 80 g (2.0 mol) of NaOH in 500 mL of water and a solution of 189 g (2.0 mol) of chloroacetic acid in 400 mL of water were mixed, and the mixture was added dropwise to a solution of 28.5 g (equivalent to 0.5 mol monomer) of polyallylamine in 50 mL of water heated to 50°C, while agitating the same. After continuing the agitation at 50°C for one hour, an aqueous solution of NaOH was added dropwise to the mixed solution until the mixed solution was adjusted to pH 10, the reaction temperature was raised to 95°C, and the reaction was continued at this temperature. The pH of the mixed solution was kept at 10 by properly adding an aqueous solution of NaOH, just like the case where P(CM)AA was synthesized. The reaction was continued until no change was observed in pH.

After completing the reaction, like the case where P(CM)AA was synthesized, an aqueous solution of HNO₃ was added to the above mixed solution until the solution became opaque white, the opaque white solution was centrifuged to sediment the solid constituent, and the supernatant was removed. Then, an aqueous solution of tetramethylammonium hydroxide was added to the sediment to dissolve the same, an aqueous solution of HNO₃ was added to the solution until the solution formed a precipitate, the solution with a precipitate was centrifuged again to sediment the solid constituent, and the supernatant was removed. This operation was repeated 3 times to obtain 58.8 g (0.34 mol) of P(DCM)AA.

### 3. Synthesis of P(CM)EI

A solution of 40 g (1.0 mol) of NaOH in 250 mL of water and a solution of 94.5 g (1.0 mol) of chloroacetic acid in 200 mL of water were mixed, and the mixture was added dropwise to a solution of 28.5 g (equivalent to 0.5 mol monomer) of polyethyleneimine in 50 mL of water heated to 50°C, while agitating the same. After continuing the agitation at 50°C for one hour, an aqueous solution of NaOH was added dropwise to the mixed solution until the mixed solution was adjusted to pH 10, the reaction temperature was raised to 95°C, and the reaction was continued at this temperature. The pH of the mixed solution was kept at 10 by properly adding an aqueous solution of NaOH, just like the case where P(CM)AA was synthesized. The reaction was continued until no change was observed in pH.

After completing the reaction, an aqueous solution of HNO₃ was added to the above mixed solution until the solution became opaque white, the opaque whitish solution was centrifuged to sediment the solid constituent, and the supernatant was removed. Then, an aqueous solution of tetramethylammonium hydroxide was added to the sediment to dissolve the same, an aqueous solution of HNO₃ was added to the solution until the solution formed a precipitate, the solution with a precipitate was centrifuged again to precipitate the solid constituent, and the supernatant was removed. This operation was repeated 3 times to obtain 58.8 g (0.34 mol) of P(CM)EI.

### B: Preparation of Metal Colloids

### 1. Preparation of PEI-protected platinum colloid (hereinafter referred to as Pt - PEI colloid)

8 g of PEI and 2000 mL of water were added to a diammine dinitro platinum solution equivalent to 2 g of Pt and heated to reflux, and a solution of 3.17 g of dimethylamine borane in 600 mL of water was added dropwise to the above mixed solution to reduce platinum. Then the solution was concentrated to obtain a 4wt% Pt-PEI colloid.

### 2. Preparation of P(CM)AA-protected platinum colloid (hereinafter referred to as Pt - P(CM)AA colloid)

8 g of P(CM)AA and 2000 mL of water were added to a diammine dinitro platinum solution equivalent to 2 g of Pt and heated to reflux, and a solution of 1.59 g of dimethylamine borane in 600 mL of water was added dropwise to the above mixed solution to reduce platinum. Then the solution was concentrated to obtain a 4wt% Pt-P(CM)AA colloid.

### 3. Preparation of P(DCM)AA-protected platinum colloid (hereinafter referred to as Pt - P(DCM)AA colloid)

8 g of P(DCM)AA, 2000 mL of water and 500 mL of ethanol were added to a diammine dinitro platinum solution equivalent to 2 g of Pt and heated to reflux to reduce platinum. Then the solution was concentrated to obtain a 4wt% Pt-P(DCM)AA colloid.

### 4. Preparation of P(CM)EI-protected platinum colloid (hereinafter referred to as Pt - P(CM)EI colloid)

8 g of P(CM)EI, 2000 mL of water and 500 mL of ethanol were added to a diammine dinitro platinum solution equivalent to 2 g of Pt and heated to reflux to reduce platinum. Then the solution was concentrated to obtain a 4wt% Pt-P(CM)EI colloid.

### C: Binding of Alkali Earth Metal Ions etc.

Binding of alkali earth metal ions etc. was performed by adding various types of metal salt solutions to the platinum colloids prepared. In this embodiment, various types of metal salt solutions and water were added to the respective colloids (0.5 g) equivalent to 20 mg of platinum so that the total volume becomes 50 mL. The amounts of the metal salt solutions added were such that the metal contents in the respective metal colloid solutions were 1 mg, 2 mg, 5 mg, 10 mg and 20 mg. The kinds of the metals and the salts thereof examined in this embodiment are shown in Table 1.

**Table 1**

| | Metal species | Metal salts |
|---|---|---|
| Alkali earth metals | Mg | Mg(NO₃)₂ · 6H₂O |
| | Ca | Ca(NO₃)₂ · 4H₂O |
| | Sr | Sr(NO₃)₂ |
| | Ba | Ba(CH₃COO)₂ |
| Transition metals | | Y(NO₃)₃ · 6H₂O |
| | Y | ZrO(NO₃)₂ · H₂O |
| | Zr | Cr(NO)₃ · 9H₂O |
| | Cr | Mn(NO₃)₂ · 6H₂O |
| | Mn | Fe(NO₃)₃ · 9H₂O |
| | Fe | Co(NO₃)₃ · 6H₂O |
| | Co | Ni(NO₃)₂ · 6H₂O |
| | Ni | Ru(NO₃)₃ |
| | Ru | Rh(NO₃)₂ |
| | Rh | Pd(NO₃)₂ |
| | Pd | Cu(NO₃)₂ · 3H₂O |
| | Cu | AgNO₂ |
| | Zn | Zn(NO₃)₂ · 3H₂O |
| | In | Cd(NO₃)₂ · 4H₂O |
| | | In(NO₃)₃ · xH₂O |
| Rare earth metals | La | La(NO₃) · 6H₂O |
| | Ce | Ce(NO₃)₃ · 6H₂O |
| | Sm | Pr(NO₃)₃ · 6H₂O |
| | Nd | Sm(NO₃)₃ · 6H₂O |
| | Eu | Nd(NO₃)₃ · 6H₂O |
| | | Eu(NO₃)₃ · 6H₂O |
| Others | Al | Al(NO₃)₃ · 9H₂O |
| | Ga | Ga(NO₃)₃ · xH₂O |

### Water-Solubility Test

First, for each of the prepared metal colloids, whether it is well soluble in water or not was examined. The examination was made in such a manner as to allow each of the prepared colloid solutions to stand for 24 hours and check the presence or absence of a precipitate in the solution.

Table 2 shows results of the water-solubility examination made for the metal colloids containing PEI, as a protective agent, while varying the kind of the auxiliary metal used. It is seen from Table 2 that the metal colloids prepared in this embodiment formed no precipitate and exhibited good water-solubility when they contained 10 mg of auxiliary metal ions, regardless of the kind of the auxiliary metal ion used.

**Table 2**

| Metal ion content | Type of metal ion co-catalyst | | | |
|---|---|---|---|---|
| | Alkali earth metal ion | Transition metal ion | Rare earth metal ion | Others (Al, Ga) |
| 1 mg | ○ | ○ | ○ | ○ |
| 2 mg | ○ | ○ | ○ | ○ |
| 3 mg | ○ | ○ | ○ | ○ |
| 10 mg | ○ | ○ | ○ | ○ |
| 20 mg | ○ | × | × | × |
| ○ No precipitate was formed. | | | | |
| × A precipitate was formed. | | | | |

Table 3 shows results of the water-solubility examination made for each of the metal colloids containing a transition metal, Zr, as an auxiliary metal ions while varying the kind of the protective agent used. It is seen from Table 3 that the metal colloids prepared in this embodiment were on the whole good in water-solubility when they contained 2 mg or less of metal ions, regardless of the kind of the protective agent used.

**Table 3**

| Zr content | Protective agent | | | |
|---|---|---|---|---|
| | PEI | P(CM)AA | P(DCM)AA | P(CM)EI |
| 1 mg | ○ | ○ | ○ | ○ |
| 2 mg | ○ | ○ | ○ | ○ |
| 5 mg | ○ | Δ | ○ | ○ |
| 10 mg | ○ | × | × | × |
| 20 mg | × | × | × | × |
| ○ No precipitation | | | | |
| Δ Slight precipitation | | | | |
| × Precipitation | | | | |

### Adsorptivity Test

Then, adsorptivity was examined as to the prepared metal colloids. To examine the adsorptivity depending on the kind of the auxiliary metal used, first metal colloids containing PEI, as the protective agent, as well as different auxiliary metals at different concentrations were made adsorbed by alumina in the following manner.

Solutions were prepared by adding arbitrary amounts of aqueous solutions containing different kinds and amounts of ions as well as water to the respective PEI-protected colloid solutions (0.5 g) equivalent to 20 mg Pt so that the total volume of each solution becomes 50 mL. After 1 g of alumina was added to each solution, ammonium was added, while agitating vigorously, so that the solution was adjusted to pH 10 to allow the alumina to adsorb the colloid.

Then, each of the colloid solutions where the colloids were adsorbed by the alumina was filtered, the supernatant was taken, 5 mL of aqua regia was added to 1 mL of the supernatant, the mixture was heated to reflux, water was added to the distillate so that the volume of the distillate becomes 10 mL, and the 10 mL of distillate solution was used for ICP analysis. And the difference in platinum concentration and metal ion concentration between the supernatant before the adsorption operation, which is a blank solution in terms of metal ions, and the supernatant after the adsorption operation was obtained from the results of the ICP analysis. The absorptivity was judged using the obtained difference. The results are shown in Table 4.

**Table 4**

| Metal ion cocatalyst (M^{N+}) content | Before adsorption* | | After adsorption | | | | | | | |
|---|---|---|---|---|---|---|---|---|---|---|
| | Pt | M^{N+} | Ca | | Ba | | Transition metal | | Rare earth metal | |
| | | | Pt | M^{N+} | Pt | M^{N+} | Pt | M^{N+} | Pt | M^{N+} |
| 1 mg | 40 | 2 | <1 | <1 | <1 | <1 | <1 | <1 | <1 | <1 |
| 2 mg | 40 | 4 | <1 | 1.07 | <1 | 1.03 | <1 | <1 | <1 | <1 |
| 5 mg | 40 | 10 | <1 | 1.85 | <1 | 1.75 | <1 | <1 | <1 | <1 |
| 10 mg | 40 | 20 | <1 | 4.02 | <1 | 3.64 | <1 | <1 | <1 | <1 |
| 20 mg | 40 | 40 | <1 | 7.7 | <1 | 7.80 | - | - | - | - |

| | | | | | | | | | | |
|---|---|---|---|---|---|---|---|---|---|---|
| (unit: ppm) "-" indicates the concentration could not be measured due to precipitation. * The concentrations of platinum and co-catalyst metal ions before adsorption were constant, regardless of the kind of the co-catalyst metal ion used. | | | | | | | | | | |

As is seen from Table 4, metal colloids in which alkali earth metal ions were bound to the protective agents were on the whole adsorbed on alumina when their auxiliary metal ion content is 2 mg or less. When binding transition metal ions or rare earth metal ions to the protective agents, almost none of those metal ions were observed. This indicates that such metal ions were adsorbed by and supported on alumina in state where they are bound to the polyethyleneimine portion of the Pt colloids.

Then, the difference in adsorptivity was examined for different kinds of the protective agents used. In this case, metal colloids having Zr ions, as metal ions, bound thereto were adsorbed by alumina in the following manner.

For the PEI-Pt colloids, first an aqueous solution of ZrO(NO₃)₂ equivalent to 1 mg of Zr ions and water were added to the colloidal solution (0.5 g) equivalent to 20 mg of Pt so that the solution was 50 mL. After 1 g of alumina was added to the solution, the solution was adjusted to pH 10 by adding ammonia with vigorous agitation so that the colloid was adsorbed by the alumina. For the P(CM)AA-Pt colloid, P(DCM)AA-Pt colloid and P(CM)EI-Pt colloid, first an aqueous solution of ZrO(NO₃)₂ equivalent to 1 mg of Zr ions and water were added to each colloidal solution (0.5 g) equivalent to 20 mg of Pt so that the solution becomes 50 mL. After 1 g of alumina was added to each solution, the solution was adjusted to pH 4 by adding nitric acid with vigorous agitation so that the colloid was adsorbed by the alumina.

The concentrations of platinum and the metal ions in the supernatant of each colloidal solution after the adsorption operation were measured in the same manner as above and the adorptivity of each colloid was measured. The results are shown in Table 5.

**Table 5**

| Before adsorption | | PEI | | P(CM)AA | | P(DCM)AA | | P(CM)EI | |
|---|---|---|---|---|---|---|---|---|---|
| Pt | Zr | Pt | Zr | Pt | Zr | Pt | Zr | Pt | Zr |
| 40 | 2 | <1 | <1 | <1 | <1 | <1 | <1 | <1 | <1 |
| (Unit: ppm) | | | | | | | | | |

As is seen from Table 5, almost no Pt and Zr ions were detected in the supernatant of each metal colloidal solution after adsorption operation. The results confirmed that in the metal colloids, Pt and Zr were effectively adsorbed on the alumina.

### Characterization of State of Adsorbed Metals

Lastly, for the alumina on which a metal colloid including PEI as the protective agent, Pt as the precious metal and Ce as the metal ions had been adsorbed, the state of adsorbed Pt and Ce was examined. The metal colloid was prepared by adding a solution of Ce(NO₃)₃·6H₂O to the same Pt-PEI colloid as above so that the Ce content was 10 mg. The adsorption of the metal colloid by alumina was carried out in the same manner as above.

After the adsorption operation, the state of absorbed Pt and Ce was analyzed by EPMA area analysis. Figure 1 shows the result of EPMA (line analysis). The analytical result demonstrated that there existed neither Pt nor Ce particles independently on the alumina, but Pt and Ce particles were adsorbed on the alumina in close proximity to each other.

## Claims

1. A metal colloid comprising: a solvent composed of water or a mixed solvent of water and an organic solvent; cluster particles comprising one or more metal species; and a protective agent for protecting the cluster particles,
wherein the protective agent is a polymeric material which can be bound to one or more ion species selected from the group consisting of alkali earth metal ions, transition metal ions, rare earth metal ions, an aluminum ion and a gallium ion.

2. A metal colloid comprising: a solvent composed of water or a mixed solvent of water and an organic solvent; cluster particles comprising one or more metal species; and a protective agent for protecting the cluster particles,
wherein the protective agent comprises a polymeric material which can be bound to one or more ion species selected from the group consisting of alkali earth metal ions, transition metal ions, rare earth metal ions, an aluminum ion and a gallium ion, and
the protective agent has one or more ion species selected from the group consisting of alkali earth metal ions, transition metal ions, rare earth metal ions, an aluminum ion and a gallium ion bounded thereto.

3. The metal colloid according to claim 1 or 2, wherein the protective agent is a polymeric material having a nitrogen atom(s) and/or a carboxyl group(s) in its molecule.

4. The metal colloid according to claim 3, wherein the polymeric material constituting the protective agent meets any of the following requirements:
(a) when the polymeric material has nitrogen atoms, the number of nitrogen atoms / (the number of carbon atoms + the number of nitrogen atoms + the number of oxygen atoms) is 0.08 to 0.4;
(b) when the polymeric material has carboxyl groups, the number of COOH atomic groups / (the number of carbon atoms + the number of nitrogen atoms + the number of oxygen atoms) is 0.02 to 0.3; and
(c) when the polymeric material has both nitrogen atoms and carboxyl groups, (the number of nitrogen atoms + the number of COOH atomic groups) / (the number of carbon atoms + the number of nitrogen atoms + the number of oxygen atoms) is 0.02 to 0.4.

5. The metal colloid according to any of claims 1 to 4, wherein the protective agent is any one selected from the group consisting of polyethyleneimine, polyallylamine, poly(N-carboxymethyl)allylamine, poly(N,N-dicarboxymethyl)allylamine and poly(N-carboxymethyl)ethyleneimine.

6. The metal colloid according to any of claims 1 to 5, wherein the cluster particles comprise at least one metal species selected from the group consisting of gold, platinum, silver, palladium, rhodium, iridium, ruthenium and osmium.

7. A catalyst prepared by calcining the metal colloid according to any of claims 1 to 6.
